# EUROPÄISCHE PATENTSCHRIFT

(11) **EP 2 668 221 B1**
(45) Veröffentlichungstag und Bekanntmachung des Hinweises auf die Patenterteilung: **09.12.2015**
(21) Anmeldenummer: 12700852.2
(22) Anmeldetag: 23.01.2012
(51) Int. Cl.: C08G 18/40, C08G 18/58, C08G 18/66, B29C 70/52

(54) **VERSTÄRKTE POLYURETHANPULTRUDATE UND DEREN HERSTELLUNG**
REINFORCED PULTRUDED POLYURETHANE AND PRODUCTION THEREOF
PRODUITS EN POLYURÉTHANE PULTRUDÉS RENFORCÉS ET LEUR PRODUCTION

(30) Priorität: 28.01.2011 DE 102011003294
(43) Veröffentlichungstag der Anmeldung: 04.12.2013
(73) Patentinhaber: Covestro Deutschland AG, 51373 Leverkusen (DE)
(72) Erfinder: WEGENER, Dirk, 40789 Monheim (DE); LINDNER, Stefan, 50670 Köln (DE); SCHLEIERMACHER, Stephan, 50259 Pulheim (DE)
(74) Vertreter: Levpat
(86) Internationale Anmeldenummer: PCT/EP2012/050962
(87) Internationale Veröffentlichungsnummer: WO 2012/101085

(56) Entgegenhaltungen:
- WO-A1-01/92364
- US-A1- 2008 090 921

## Beschreibung

Die vorliegende Erfindung betrifft verstärkte Polyurethanpultrudate und ein Verfahren zu ihrer Herstellung durch Pultrusion.

In WO 01/92364 A1 wird eine Harz-Zusammensetzung aus Polyisocyanat, Polyol und 5-20% Bisphenol-A-Epoxid-Harz beschrieben. Bei dem Polyisocyanat kann es sich um ein aromatisches Polyisocyanat handeln, die Polyol-Komponente besteht aus einer Mischung aus Polyesterpolyol und Polyetherpolyol. Als Polyisocyanat wird MDI genannt. Als Polyetherpolyol können eine oder mehrere organische Polyhydroxy-Verbindungen mit einer mittleren Masse von 70-400 eingesetzt werden. Die Zugabe von Fasern, beispielsweise Glasfasern für Anwendungen wie Pultrusion ist ebenfalls beschrieben. Es wird ein breiter Topfzeitbereich erwähnt, ohne Hinweise zu geben, wie konkrete Topfzeiten erreicht werden können. Zu den Topfzeiten bzw. Gelzeiten von einzelnen Zusammensetzungen werden ebenfalls keine Angaben gemacht. Der erwähnte Bereich von 5 Minuten bis 3 Stunden ist für den Fachmann offensichtlich im unteren Bereich für die Pultrusion nicht geeignet, da eine ausreichende Tränkung der Verstärkungsfasern nicht gewährleistet ist. Hinweise zu Endeigenschaften, wie einer ausreichend hohen Glasübergangstemperatur, werden nur allgemein gegeben. Es wird erwähnt, dass zum Erreichen einer hohen Glasübergangstemperatur eine hohe Vernetzungsdichte einzustellen ist. Für den Fachmann ist es offensichtlich, dass mit dieser hohen Vernetzungsdichte eine Topfzeit bzw. Gelzeit im unteren, ungeeigneten Bereich resultiert.

US20080090921beschreibt eine Harzzusammensetzung, die mindestens einen DMC-katalysierten Polyether und ein Isocyanat enthält. Zu den Topfzeiten und Gelzeiten sowie Glasübergangstemperaturen von einzelnen Zusammensetzungen werden keine Angaben gemacht.

Aufgabe der vorliegenden Erfindung war es, Polyurethanpultrudate zur Verfügung zu stellen, die gute Verarbeitungsbedingungen, wie beispielsweise lange Verarbeitbarkeit, und gleichzeitig gute Produkteigenschaften, wie beispielsweise hohe Glasübergangstemperaturen und hohe Module, aufweisen, sowie ein Verfahren zu ihrer Herstellung.

Überraschenderweise konnte die Aufgabe durch die erfindungsgemäßen Polyurethanpultrudate gelöst werden.

Gegenstand der Erfindung sind verstärkte Polyurethanpultrudate erhältlich nach dem Pultrusionsverfahren durch Umsetzung von
A) einem mindestens zweiphasigen Gemisch nicht homogen vermischbarer Komponenten a) und b) mit
   a) einem oder mehreren Polyetherpolyolen mit einer OH-Zahl von 15 bis 50 auf Basis Propylenoxid und
   b) einem Gemisch aus einem oder mehreren Polyetherpolyolen mit einer OH-Zahl von 150 bis 600 und einem oder mehreren Kettenverlängerern und/oder Vernetzern mit einer OH-Zahl von 700 bis 1827 und
B) einem oder mehreren Epoxiden mit
C) organischen Polyisocyanaten aus der Gruppe bestehend aus 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, den Isomeren von Bis(isocyanatocyclohexyl)methan oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) oder höhere Homologe von MDI (polymeres MDI), 1,3- und/oder 1,4-Bis-(2-isocyanato-prop-2-yl)-benzol (TMXDI), 1,3-Bis-(isocyanatomethyl)benzol (XDI) sowie Alkyl-2,6-diisocyanatohexanoat (Lysindiisocyanat) mit C₁- bis C₆-Alkylgruppen oder Mischungen daraus und gegebenenfalls anteilig modifizierten Diisocyanaten mit Uretdion-, Isocyanurat-, Urethan-, Carbodiimid-, Uretonimin-, Allophanat-, Biuret-, Amid-, Iminooxadiazindion- und/oder Oxadiazintrionstruktur sowie nicht-modifiziertem Polyisocyanaten mit mehr als 2 NCO-Gruppen pro Molekül
   in Gegenwert von
D) gegebenenfalls Katalysatoren
E) Entformungsmitteln
F) gegebenenfalls Inhibitoren
G) gegebenenfalls sonstigen Additiven und/oder Hilfsmitteln
H) gegebenenfalls Füllstoffen
I) Endlosfasern, Fasermatten und/oder textilen Geweben als Verstärkungsstoffe.

Ein weiterer Gegenstand der Erfindung ist ein Verfahren zur Herstellung der erfindungsgemäßen verstärkten Polyurethanpultrudate mittels der Pultrusionstechnik, welches dadurch gekennzeichnet ist, dass
(i) die Komponenten a) und b) miteinander vermischt werden,
(ii) der Mischung aus (i) die Komponenten B), D), E), F), G) und H) zugemischt werden,
(iii) zur Mischung aus (ii) die Isocyanatkomponente C) in einer Mischkammer zugegeben wird,
(iv) die Reaktionsmischung aus (iii) in eine Injektionsbox geleitet wird,
(v) gleichzeitig zum Verfahrensschritt (iv) die Verstärkungsstoffe I) durch die Injektionsbox und zusammen mit der Reaktionsmischung (iii), die in der Injektionsbox vorliegt, durch eine Kammer, in der die Härtung erfolgt, geleitet werden,
(vi) der Verbund aus Reaktionsmischung und Verstärkungsstoffen in der Kammer gehärtet wird,
(vii) der gehärtete Verbund aus (vi) mittels Zugmechanismen aus der Kammer gezogen wird und
(viii)der gehärtete Verbund auf die gewünschte Länge geschnitten wird.

Die Mischung der Polyole a) und b) ist inhomogen, das heißt, sie liegt mindestens zweiphasig vor.

Das mindestens zweiphasige Gemisch der nicht homogen vermischbaren Komponenten a) und b) weist vorzugsweise die folgenden Anteile auf, wobei die Summe der Gewichtsanteile 100 beträgt:
a) ≥ 10 Gew.-% bis ≤ 30 Gew.-% von einem oder mehreren Polyetherpolyolen mit einer OH-Zahl von 15 bis 50 auf Basis Propylenoxid
b) ≥ 45 Gew.-% bis ≤ 65 Gew.-% von einem oder mehreren Polyetherpolyolen mit einer OH-Zahl von 150 bis 600 und ≥ 15 Gew.-% bis ≤ 35 Gew.-% von einem oder mehreren Kettenverlängerern und/oder Vernetzern mit einer OH-Zahl von 700 bis 1827.

Die Härtung in der Kammer erfolgt bevorzugt durch erhöhte Temperatur. Bei der bevorzugten Beheizung weist die Kammer vorzugsweise mehrere Heizzonen auf. Die Kammer kann gleichzeitig bei Bedarf für eine Formgebung genutzt werden.

Als Epoxide können niedrigviskose aliphatische, cycloaliphatische oder aromatische Epoxide sowie deren Mischungen eingesetzt werden. Die Epoxide können durch Umsetzung von beispielsweise Epichlorhydrin mit Alkoholen hergestellt werden. Als Alkohole können beispielsweise Bisphenol A, Bisphenol F, Bisphenol S, Cyclohexandimethanol, Phenol-Formaldehyd-Harze, Kresol-Formaldehyd-Novolake, Butandiol, Hexandiol, Trimethylolpropan oder Polyetherpolyole eingesetzt werden. Es können auch Glycidylester, beispielsweise von Phthalsäure, Isophthalsäure oder Terephthalsäure sowie deren Mischungen eingesetzt werden. Epoxide können auch durch die Epoxidierung von Doppelbindungen enthaltenden organischen Verbindungen hergestellt werden, beispielsweise durch die Epoxidierung von fetten Ölen, wie Sojaöl, zu epoxidiertem Sojaöl. Als Epoxide können auch monofunktionelle Epoxide eingesetzt werden. Diese können durch die Reaktion von beispielsweise Epichlorhydrin mit Monoalkoholen hergestellt werden, beispielsweise Monoglycidylether von Alkoholen mit 4 bis 18 Kohlenstoffatomen, Cresol, p-tert.-Butylphenol. Weitere einsetzbare Epoxide sind beispielsweise in "Handbook of Epoxy resins" von Henry Lee und Kris Neville, McGraw-Hill Book Company, 1967, beschrieben. Der Epoxidequivalentwert kann nach ASTM D-1652 bestimmt werden.

Beispiele von geeigneten Polyisocyanaten sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die Isomeren von Bis(isocyanatocyclohexyl)methan oder deren Mischungen beliebigen Isomerengehalts, 1,4-Cyclohexylendiisocyanat, 1,4-Phenylendiisocyanat, 2,4-und/oder 2,6-Toluylendiisocyanat (TDI), 1,5-Naphthylendiisocyanat, 2,2'-und/oder 2,4'- und/oder 4,4'-Diphenylmethandiisocyanat (MDI) oder höhere Homologe von MDI (polymeres MDI), 1,3-und/oder 1,4-Bis-(2-isocyanato-prop-2-yl)-benzol (TMXDI), 1,3-Bis-(isocyanatomethyl)benzol (XDI) sowie Alkyl-2,6-diisocyanatohexanoate (Lysindiisocyanate) mit C₁- bis C₆-Alkylgruppen. Besonders bevorzugt ist eine Mischung aus MDI und polymerem MDI (p MDI).

Neben den vorstehend genannten Polyisocyanaten können anteilig auch modifizierte Diisocyanate mit Uretdion-, Isocyanurat-, Urethan-, Carbodiimid-, Uretonimin-, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül, wie zum Beispiel 4-Isocyanatomethyl-1,8-octandiisocyanat (Nonantriisocyanat) oder Triphenylmethan-4,4',4"-triisocyanat mit eingesetzt werden.

Bevorzugt liegt die Anzahl der NCO-Gruppen der eingesetzten Isocyanatkomponente zur Anzahl der gegenüber Isocyanaten reaktiven Gruppen (auch Kennzahl oder Kenngröße genannt) in einem Zahlenverhältnis von ≥ 70:100 bis ≤ 150:100, besonders bevorzugt von ≥ 90:100 bis ≤ 130:100. Die an sich langsam ablaufende Gelbildungsreaktion kann gegebenenfalls durch Zusatz von Katalysatoren beschleunigt werden. Dabei können an sich bekannte, die Reaktion zwischen Hydroxyl- und Isocyanatgruppen beschleunigende Katalysatoren verwendet werden. Insbesondere kommen tertiäre Amine der an sich bekannten Art in Frage, z.B. Triethylamin, Tributylamin, N-Methylmorpholin, N-Ethylmorpholin, N-Cocomorpholin, N,N,N',N'-Tetramethylethylendiamin, 1,4-Diazabicyclo[2.2.2]octan, N-Methyl-N'-dimethylaminoethylpiperazin, N,N-Dimethylcyclohexylamin, N,N,N',N'-Tetramethyl-1,3-butandiamin, N,N-Dimethylimidazol-ß-phenylethylamin, 1,2-Dimethylimidazol oder 2-Methylimidazol. Auch organische Metallkatalysatoren, insbesondere organische Wismutkatalysatoren, wie z.B. Wismut-(III)- neodecanoat oder organische Zinnkatalysatoren, wie z.B. Zinn-(II)-salze von Carbonsäuren, wie Zinn-(II)-acetat, Zinn-(II)-octoat, Zinn-(II)-ethylhexoat und Zinn-(II)-laurat und die Dialkylzinnsalze von Carbonsäuren, wie z.B. Dibutyl-zinndiacetat, Dibutylzinndilaurat, Dibutylzinnmaleat, Dibutylzinnsulfid oder Dioctylzinndiacetat können allein oder in Kombination mit den tertiären Aminen verwendet werden. Vorzugsweise werden 0 bis 5 Gew.-%, insbesondere 0,3 bis 2,0 Gew.-%, Katalysator bzw. Katalysatorkombination, bezogen auf die Gelmasse eingesetzt. Weitere Vertreter von Katalysatoren sowie Einzelheiten über die Wirkungsweise der Katalysatoren sind im Kunststoff-Handbuch, Band VII "Polyurethane", 3. Auflage ", Carl Hanser Verlag, München / Wien, 1993 auf den Seiten 104 - 110 beschrieben.

Gegebenenfalls mitzuverwendende Füllstoffe können sowohl anorganische als auch organische Füllstoffe sein. Als anorganische Füllstoffe seien beispielhaft genannt: silikatische Mineralien, beispielsweise Schichtsilikate, Metalloxide wie Eisenoxide, insbesondere pyrogen hergestellte Metalloxide wie Aerosile (wie in EP-B-1 125 975 beschrieben), Metallsalze wie Schwerspat, anorganische Pigmente wie Cadmiumsulfid, Zinksulfid sowie Glas, Mikroglaskugeln, Mikroglashohlkugeln, u.a. Verwendet werden können natürliche und synthetische faserförmige Mineralien wie Wollastonit und Glasfasern verschiedener Länge, die gegebenenfalls geschlichtet sein können. Als organische Füllstoffe seien beispielhaft genannt: kristalline Paraffine oder Fette ("Phase - Change - Material") (wie in EP-B-1 277 801 beschrieben), Pulver auf Basis von Polystyrol, Polyvinylchlorid, Harnstoff-Formaldehyd-Massen und/oder Polyhydrazodicarbonamiden (z.B. aus Hydrazin und Toluylendiisocyanat erhaltene). Dabei können z.B. Harnstoff-Formaldehyd-Harze oder Polyhydrazodicarbonamide direkt in einem für die erfindungsgemäße Gelmassen-Herstellung zu verwendenden Polyole hergestellt worden sein. Es können auch Mikrohohlkugeln organischer Herkunft (wie in EP-B-1 142 943 beschrieben) oder Kork (wie in DE 100 24 087 beschrieben) zugefügt werden. Die organischen bzw. anorganischen Füllstoffe können einzeln oder als Gemische verwendet werden. Die Füllstoffe werden, falls überhaupt, der Reaktionsmischung in Mengen von 0 bis zu 50 Gew.-%, vorzugsweise von 0 bis zu 30 Gew.-%, bezogen auf das Gesamtgewicht der Gelmasse zugegeben.

Als Entformungsmittel können beispielsweise die aus den Pultrusionsverfahren bekannten Entformungsmittel. verwendet werden.

Zu den Hilfs- und Zusatzstoffen, die gegebenenfalls mitverwendet werden, gehören beispielsweise färbende Agenzien, wasserbindende Substanzen, Flammschutzmittel, Weichmacher und/oder einwertige Alkohole.

Als färbende Agenzien können die erfindungsgemäßen Gelmassen z.B. für die Einfärbung von Polyurethanen an sich bekannte Farbstoffe und/oder Farbpigmente auf organischer und/oder anorganischer Basis enthalten, beispielsweise Eisenoxid- und/oder Chromoxidpigmente und Pigmente auf Phthalocyanin- und/oder Monoazo-Basis.

Als wasserbindende Substanzen geeignet sind sowohl gegenüber Wasser hochreaktive Verbindungen, wie z.B. Tris(chlorethyl)orthoformat, wie auch wasserbindende Füllstoffe, z.B. Erdalkalioxide, Zeolithe, Aluminiumoxide und Silikate. Geeignete synthetische Zeolithe sind z.B. unter der Bezeichnung Baylith® im Handel.

Geeignete, gegebenenfalls mitzuverwendende Flammschutzmittel sind beispielsweise Trikresylphophat, Tris-2-chlorethylphosphat, Tris-chlorpropylphosphat und Tris-2,3-dibrompropylphosphat. Außer den bereits genannten halogensubstituierten Phosphaten können auch anorganische Flammschutzmittel, wie Aluminiumoxidhydrat, Ammoniumpolyphosphat, Calciumsulfat, Natriumpolymetaphosphat oder Aminphosphate, z.B. Melaminphosphate verwendet werden.

Weitere, gegebenenfalls mitzuverwendende Zusatzstoffe sind einwertige Alkohole wie Butanol, 2-Ethylhexanol, Octanol, Dodecanol oder Cyclohexanol, die gegebenenfalls zwecks Herbeiführung eines gewünschten Kettenabbruchs mit verwendet werden können.

Als Endlosfasern oder Fasermatten können beispielsweise Glasfasern, Kohlefasern, Polyesterfasern, Aramidfasern, Polyethylenfasern, Basaltfasern, Stahlfasern oder natürliche Fasern oder daraus hergestellte Fasermatten eingesetzt werden. Ein hoher Faseranteil im Polyurethanpultrudat ist für die mechanischen Produkteigenschaften von Vorteil. Bevorzugt liegt der Faseranteil zwischen 60 und 90 Gew.-%, besonders bevorzugt zwischen 75 und 85 Gew.-%.

Die verwendeten Polyurethanreaktivgemische eignen sich sehr gut zur Herstellung von Pultrudaten.

Die Erfindung soll anhand der nachfolgenden Beispiele näher erläutert werden.

### Beispiele:

Die nachfolgend beschriebenen Matrixeigenschaften wurden an Matrixplatten ohne Verstärkungsstoffe I) ermittelt. Die eingesetzten Polyurethanreaktivmischungen können auf handelsüblichen Pultrusionsanlagen verarbeitet werden

### Herstellung der Testplatten:

Die Polyolformulierung (Mischung aus den Komponenten a) und b) sowie den Komponenten B) bis D) und H)) wurde für 45 Minuten entgast und danach mit entgastem Isocyanat C) gemischt. Die Mischung wurde bei ca. 10mbar Druck für einige Minuten gerührt. Die Mischung wurde danach in eine 4 mm dicke Plattenform gegossen. Danach wurde die Probe bei 160 °C für zwei Stunden getempert.

Aus den Platten wurden Probenkörper hergestellt, die mit dem Torsionspendel-Verfahren nach DIN EN ISO 6721-B: 1996-12 charakterisiert wurden. Dabei wurde das Torsionsspeichermodul G' bei 20 °C bestimmt und die Glasübergangstemperatur Tg als Maximum des Verlustfaktor tan δ. Die Gelzeit wurde mit einem Geltimer bestimmt.

### Ausgangskomponenten:

Komponente a): Lineares Polypropylenoxidpolyol, Hydroxylzahl 28 mg KOH/g.
Komponente b1): Trifunktionelles Polypropylenoxidpolyol mit Glyzerin als Starter, Hydroxylzahl 235 mg KOH/g.
Komponente b2): Trifunktionelles Polypropylenoxidpolyol mit Glyzerin als Starter, Hydroxylzahl 450 mg KOH/g.
Komponente b3): Trifunktionelles Polypropylenoxidpolyol mit Glyzerin als Starter, Hydroxylzahl 1050 mg KOH/g.
Komponente G): Trocknungsmittel auf Basis Zeolith.
Komponente E): Trennmittel Techlube 550 HB von Technick Products
Komponente D): Fomrez UL29: Katalysator der Firma Momentive
Komponente B1): Eurepox 710: Bisphenol A Epichlorhydrinharz mit durchschnittlichem Molekulargewicht ≥ 700 g/mol; Epoxidäquivalentgewicht 183-189 g/eq; Viskosität bei 25 °C: 10000-12000 mPas.
Komponente B2): Araldite DY-T: Triglycidylether von Trimetholpropan, Produkt der Firma Huntsman; Epoxidäquivalentgewicht 122-128 g/eq, Viskosität bei 25 °C: 100-300 mPas
Komponente B3): Araldite DY-D: Diglycidylether von Butandiol, Produkt der Firma Huntsman; Epoxidäquivalentgewicht 118-125 g/eq, Viskosität bei 25 °C: 15 - 25 mPas
Komponente B4): Araldite DY-K: Monoglycidylether von Kresol, Produkt der Firma Huntsman; Epoxidäquivalentgewicht 175-189 g/eq, Viskosität bei 25 °C: 6 - 12 mPas
Komponente C): Polymeres MDI mit einem NCO-Gehalt von 31,4 Gew.-%

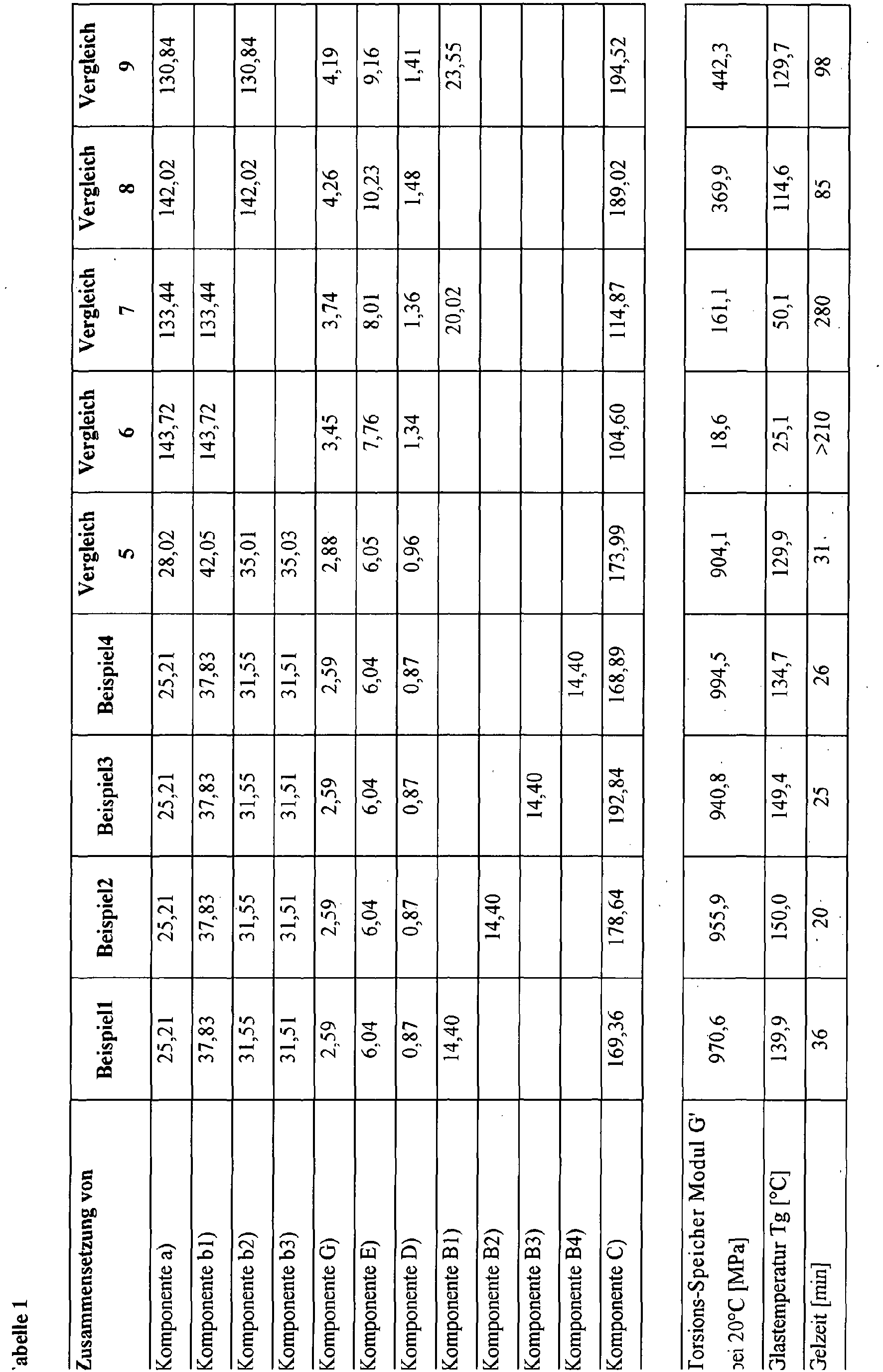

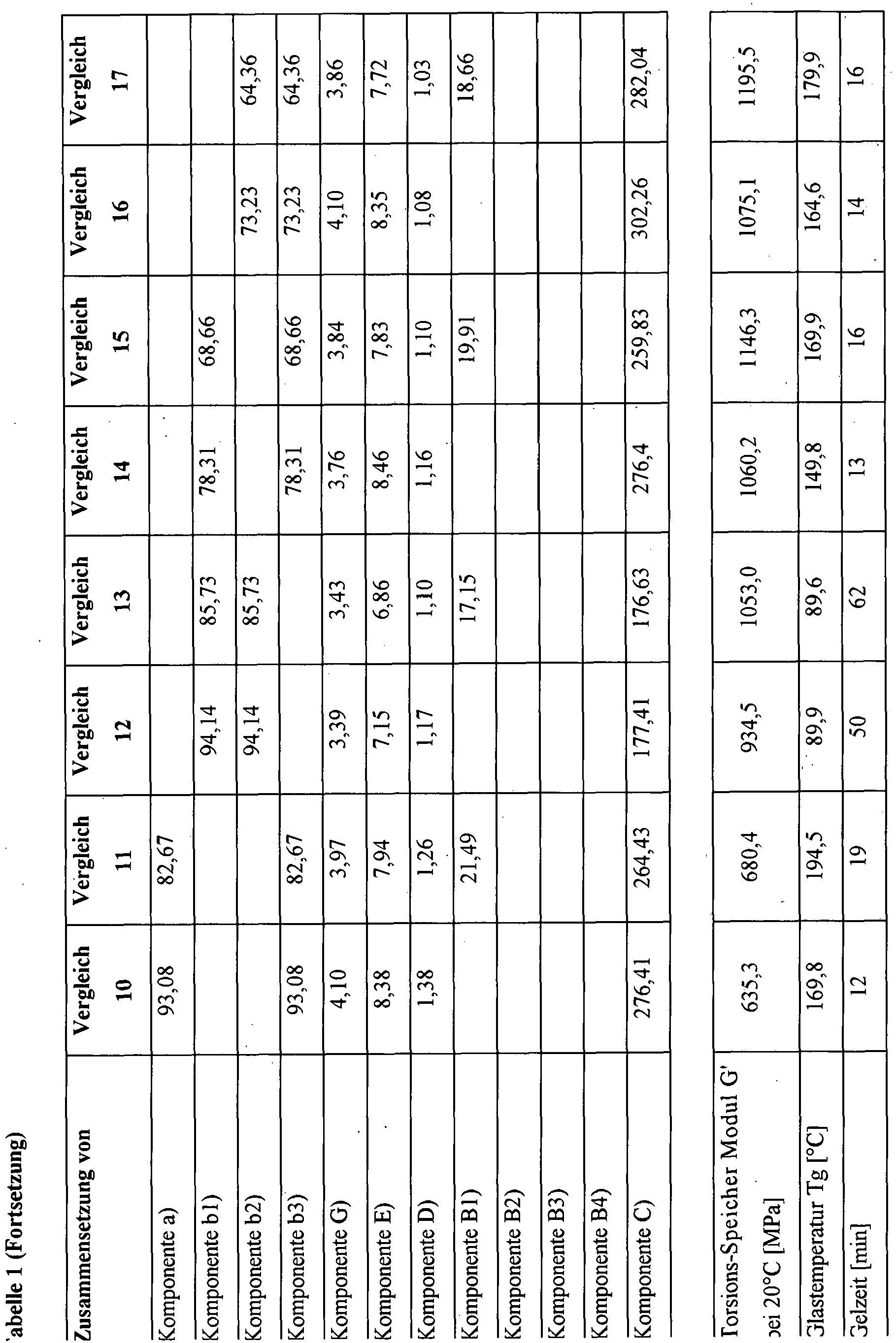

Wie der Tabelle 1 zu entnehmen ist, weisen die erfindungsgemäßen Polyurethanformteile gemäß Beispiel 1 bis 4 gute mechanische Eigenschaften (einen hohen Torsions-Speichermodul G' und eine hohe Glasübergangstemperatur) bei gleichzeitig langer Verarbeitbarkeit (lange Gelzeit) auf, wohingegen in den Vergleichsbeispielen 5 bis 17 entweder der Torsions-Speichermodul G' zu niedrig oder die Glasübergangstemperatur zu niedrig oder die Gelzeit zu kurz ist.

## Patentansprüche

1. Verstärkte Polyurethanpultrudate erhältlich durch Umsetzung von
A) einem mindestens zweiphasigen Gemisch nicht homogen vermischbarer Komponenten a) und b) mit
a) einem oder mehreren Polyetherpolyolen mit einer OH-Zahl von 15 bis 50 auf Basis Propylenoxid und
b) einem Gemisch aus einem oder mehreren Polyetherpolyolen mit einer OH-Zahl von 150 bis 600 und einem oder mehreren Kettenverlängerern und/oder Vernetzern mit einer OH-Zahl von 700 bis 1827 und
B) einem oder mehreren Epoxiden mit
C) organischen Polyisocyanaten aus der Gruppe bestehend aus 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, den Isomeren von Bis(isocyanatocyclohexyl)methan oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) oder höhere Homologe von MDI (polymeres MDI), 1,3- und/oder 1,4-Bis-(2-isocyanato-prop-2-yl)-benzol (TMXDI), 1,3-Bis-(isocyanatomethyl)benzol (XDI) sowie Alkyl-2,6-diisocyanatohexanoat (Lysindiisocyanat) mit C₁- bis C₆-Alkylgruppen oder Mischungen daraus und gegebenenfalls anteilig modifizierten Diisocyanaten mit Uretdion-, Isocyanurat-, Urethan-, Carbodiimid-, Uretonimin-, Allophanat-, Biuret-, Amid-, Iminooxadiazindion- und/oder Oxadiazintrionstruktur sowie nicht-modifiziertem Polyisocyanat mit mehr als 2 NCO-Gruppen pro Molekül
in Gegenwert von
D) gegebenenfalls Katalysatoren
E) Entformungsmitteln
F) gegebenenfalls Inhibitoren
G) gegebenenfalls sonstigen Additiven und/oder Hilfsmitteln
H) gegebenenfalls Füllstoffen
I) Endlosfasern, Fasermatten und/oder textilen Geweben als Verstärkungsstoffe.

2. Verstärktes Polyurethanpultrudat gemäß Anspruch 1, wobei das Gemisch der nicht homogen vermischbaren Komponenten a) und b) die folgenden Anteile aufweist, wobei die Summe der Gewichtsanteile 100 beträgt
a) ≥ 10 Gew.-% bis ≤ 30 Gew.-% von einem oder mehreren Polyetherpolyolen mit einer OH-Zahl von 15 bis 50 auf Basis Propylenoxid
b) ≥ 45 Gew.-% bis ≤ 65 Gew.-% von einem oder mehreren Polyetherpolyolen mit einer OH-Zahl von 150 bis 600 und ≥ 15 Gew.-% bis ≤ 35 Gew.-% von einem oder mehreren Kettenverlängerern und/oder Vernetzern mit einer OH-Zahl von 700 bis 1827.

3. Verfahren zur Herstellung der verstärkten Polyurethanpultrudate gemäß Anspruch 1 oder 2 - mittels der Pultrusionstechnik, welches **dadurch gekennzeichnet ist, dass**
(i) die Komponenten a) und b) miteinander vermischt werden,
(ii) der Mischung aus (i) die Komponenten B), D), E), F), G) und H) zugemischt werden,
(iii) zur Mischung aus (ii) die Isocyanatkomponente C) in einer Mischkammer zugegeben wird,
(iv) die Reaktionsmischung aus (iii) in eine Injektionsbox geleitet wird,
(v) gleichzeitig zum Verfahrensschritt (iv) die Verstärkungsstoffe I) durch die Injektionsbox und zusammen mit der Reaktionsmischung (iii), die in der Injektionsbox vorliegt, durch eine Kammer, in der die Härtung erfolgt, geleitet werden,
(vi) der Verbund aus Reaktionsmischung und Verstärkungsstoffen in der Kammer gehärtet wird,
(vii) der gehärtete Verbund aus (vi) mittels Zugmechanismen aus der Kammer gezogen wird und
(viii)der gehärtete Verbund auf die gewünschte Länge geschnitten wird.

4. Verwendung der Reaktionsmischung aus
A) einem mindestens zweiphasigen Gemisch nicht homogen vermischbarer Komponenten a) und b) mit
a) einem oder mehreren Polyetherpolyolen mit einer OH-Zahl von 15 bis 50 auf Basis Propylenoxid und
b) einem Gemisch aus einem oder mehreren Polyetherpolyolen mit einer OH-Zahl von 150 bis 600 und einem oder mehreren Kettenverlängerern und/oder Vernetzern mit einer OH-Zahl von 700 bis 1827 und
B) einem oder mehreren Epoxiden mit
C) organischen Polyisocyanaten aus der Gruppe bestehend 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, den Isomeren von Bis(isocyanatocyclohexyl)methan oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) oder höhere Homologe von MDI (polymeres MDI), 1,3- und/oder 1,4-Bis-(2-isocyanato-prop-2-yl)-benzol (TMXDI), 1,3-Bis-(isocyanatomethyl)benzol (XDI) sowie Alkyl-2,6-diisocyanatohexanoat (Lysindiisocyanat) mit C₁- bis C₆-Alkylgruppen oder Mischungen daraus und gegebenenfalls anteilig modifizierten Diisocyanaten mit Uretdion-, Isocyanurat-, Urethan-, Carbodiimid-, Uretonimin-, Allophanat-, Biuret-, Amid-, Iminooxadiazindion- und/oder Oxadiazintrionstruktur sowie nicht-modifiziertem Polyisocyanat mit mehr als 2 NCO-Gruppen pro Molekül
in Gegenwert von
D) gegebenenfalls Katalysatoren
E) Entformungsmitteln
F) gegebenenfalls Inhibitoren
G) gegebenenfalls sonstigen Additiven und/oder Hilfsmitteln
H) gegebenenfalls Füllstoffen
I) Endlosfasern, Fasermatten und/oder textilen Geweben als Verstärkungsstoffe
zur Herstellung von Pultrudaten im Pultrusionsverfahren.

## Claims

1. Reinforced pultruded polyurethane obtainable via reaction of
A) an at least two-phase mixture of not homogeneously miscible components a) and b) with
a) one or more polyether polyols with an OH number of from 15 to 50 based on propylene oxide and
b) a mixture of one or more polyether polyols with an OH number from 150 to 600 and one or more chain extenders and/or crosslinking agents with an OH number of from 700 to 1827, and
B) one or more epoxides with
C) organic polyisocyanates from the group consisting of butylene 1,4-diisocyanate, pentane 1,5-diisocyanate, hexamethylene 1,6-diisocyanate (HDI), isophorone diisocyanate (IPDI), 2,2,4- and/or 2,4,4-trimethylhexamethylene diisocyanate, the isomers of bis(isocyanatocyclohexyl)methane or a mixture of these with any desired isomer content, cyclohexylene 1,4-diisocyanate, phenylene 1,4-diisocyanate, tolylene 2,4- and/or 2,6-diisocyanate (TDI), naphthylene 1,5-diisocyanate, diphenylmethane 2,2'-and/or 2,4'- and/or 4,4'-diisocyanate (MDI) or higher homologs of MDI (polymeric MDI), 1,3- and/or 1,4-bis(2-isocyanatoprop-2-yl)benzene (TMXDI), 1,3-bis(isocyanatomethyl)benzene (XDI), and also alkyl 2,6-diisocyanatohexanoate (lysine diisocyanate) having C₁-C₆-alkyl groups, or a mixture thereof, and optionally a proportion of modified diisocyanates having uretdione, isocyanurate, urethane, carbodiimide, uretonimine, allophanate, biuret, amide, iminooxadiazinedione and/or oxadiazinetrione structure and also unmodified polyisocyanate having more than 2 NCO groups per molecule in the presence of
D) optionally catalysts
E) mold-release agents
F) optionally inhibitors
G) optionally other additives and/or auxiliaries
H) optionally fillers
I) continuous-filament fibers, fiber mats, and/or textile fabrics as reinforcing materials.

2. Reinforced pultruded polyurethane according to Claim 1, where the mixture of the not homogenously miscible components a) and b) comprises the following proportions, where the sum of the proportions by weight is 100:
a) from ≥ 10% by weight to ≤ 30% by weight of one or more polyether polyols with an OH number of from 15 to 50 based on propylene oxide
b) from ≥ 45% by weight to ≤ 65% by weight of one or more polyether polyols with an OH number of from 150 to 600 and from ≥ 15% by weight to ≤ 35% by weight of one or more chain extenders and/or crosslinking agents with an OH number of from 700 to 1827.

3. Process for producing the reinforced pultruded polyurethane according to Claim 1 or 2 by means of pultrusion technology, **characterized in that**
(i) components a) and b) are mixed with one another,
(ii) components B), D), E), F), G) and H) are admixed with the mixture from (i),
(iii) isocyanate component C) is added in a mixing chamber to the mixture from (ii),
(iv) the reaction mixture from (iii) is passed into an injection box,
(v) at the same time as step (iv), the reinforcing materials I) are passed through the injection box and are passed, together with the reaction mixture (iii) present in the injection box, through a chamber in which curing takes place,
(vi) the composite made of reaction mixture and of reinforcing materials is cured in the chamber,
(vii) the cured composite from (vi) is drawn out of the chamber by means of tension mechanisms, and
(viii) the cured composite is cut to the desired length.

4. Use of the reaction mixture made of
A) an at least two-phase mixture of not homogeneously miscible components a) and b) with
a) one or more polyether polyols with an OH number of from 15 to 50 based on propylene oxide and
b) a mixture of one or more polyether polyols with an OH number from 150 to 600 and one or more chain extenders and/or crosslinking agents with an OH number of from 700 to 1827, and
B) one or more epoxides with
C) organic polyisocyanates from the group consisting of butylene 1,4-diisocyanate, pentane 1,5-diisocyanate, hexamethylene 1,6-diisocyanate (HDI), isophorone diisocyanate (IPDI), 2,2,4- and/or 2,4,4-trimethylhexamethylene diisocyanate, the isomers of bis(isocyanatocyclohexyl)methane or a mixture of these with any desired isomer content, cyclohexylene 1,4-diisocyanate, phenylene 1,4-diisocyanate, tolylene 2,4- and/or 2,6-diisocyanate (TDI), naphthylene 1,5-diisocyanate, diphenylmethane 2,2'-and/or 2,4'- and/or 4,4'-diisocyanate (MDI) or higher homologs of MDI (polymeric MDI), 1,3- and/or 1,4-bis(2-isocyanatoprop-2-yl)benzene (TMXDI), 1,3-bis(isocyanatomethyl)benzene (XDI), and also alkyl 2,6-diisocyanatohexanoate (lysine diisocyanate) having C₁-C₆-alkyl groups, or a mixture thereof, and optionally a proportion of modified diisocyanates having uretdione, isocyanurate, urethane, carbodiimide, uretonimine, allophanate, biuret, amide, iminooxadiazinedione and/or oxadiazinetrione structure and also unmodified polyisocyanate having more than 2 NCO groups per molecule in the presence of
D) optionally catalysts
E) mold-release agents
F) optionally inhibitors
G) optionally other additives and/or auxiliaries
H) optionally fillers
I) continuous-filament fibers, fiber mats, and/or textile fabrics as reinforcing materials,
for producing pultruded materials by the pultrusion process.

## Revendications

1. Produits en polyuréthane pultrudés renforcés, pouvant être obtenus par mise en réaction de
A) un mélange au moins biphasé de composants non miscibles de manière homogène a) et b)
a) un ou plusieurs polyéther-polyols d'un indice OH de 15 à 50 à base d'oxyde de propylène et
b) un mélange d'un ou de plusieurs polyéther-polyols d'un indice OH de 150 à 600 et d'un ou de plusieurs allongeurs de chaînes et/ou agents de réticulation d'un indice OH de 700 à 1 827, et
B) un ou plusieurs époxydes, avec
C) des polyisocyanates organiques du groupe constitué par le diisocyanate de 1,4-butylène, le diisocyanate de 1,5-pentane, le diisocyanate de 1,6-hexaméthylène (HDI), le diisocyanate d'isophorone (IPDI), le diisocyanate de 2,2,4- et/ou 2,4,4-triméthylhexamétylène, les isomères de bis(isocyanatocyclohexyl)méthane ou leurs mélanges de teneur en isomères quelconque, le diisocyanate de 1,4-cyclohexylène, le diisocyanate de 1,4-phénylène, le diisocyanate de 2,4- et/ou 2,6-toluylène (TDI), le diisocyanate de 1,5-naphtylène, le diisocyanate de 2,2'-et/ou 2,4'- et/ou 4,4'-diphénylméthane (MDI) ou les homologues supérieurs du MDI (MDI polymère), le 1,3- et/ou 1,4-bis-(2-isocyanato-prop-2-yl)-benzène (TMXDI), le 1,3-bis-(isocyanatométhyl)benzène (XDI) ainsi que le 2,6-diisocyanatohexanoate d'alkyle (diisocyanate de lysine) contenant des groupes alkyle en C₁ à C₆ ou leurs mélanges, et
les diisocyanates éventuellement modifiés en partie avec une structure uretdione, isocyanurate, uréthane, carbodiimide, urétonimine, allophanate, biuret, amide, iminooxadiazinedione et/ou oxadiazinetrione, ainsi que le polyisocyanate non modifié contenant plus de 2 groupes NCO par molécule,
en présence de
D) éventuellement des catalyseurs,
E) des agents de démoulage,
F) éventuellement des inhibiteurs,
G) éventuellement d'autres additifs et/ou adjuvants,
H) éventuellement des charges,
I) des fibres filaments, des mats de fibres et/ou des tissus textiles en tant que matières renforçantes.

2. Produit en polyuréthane pultrudé renforcé selon la revendication 1, dans lequel le mélange des composants non miscibles de manière homogène a) et b) présente les proportions suivantes, la somme des proportions en poids étant de 100,
a) ≥ 10 % en poids à ≤ 30 % en poids d'un ou de plusieurs polyéther-polyols d'un indice OH de 15 à 50 à base d'oxyde de propylène,
b) ≥ 45 % en poids à ≤ 65 % en poids d'un ou de plusieurs polyéther-polyols d'un indice OH de 150 à 600 et ≥ 15 % en poids à ≤ 35 % en poids d'un ou de plusieurs allongeurs de chaînes et/ou agents de réticulation d'un indice OH de 700 à 1 827.

3. Procédé de fabrication de produits en polyuréthane pultrudés renforcés selon la revendication 1 ou 2 par la technique de pultrusion, qui est **caractérisé en ce que**
(i) les composants a) et b) sont mélangés l'un avec l'autre,
(ii) les composants B), D), E), F), G) et H) sont incorporés dans le mélange de (i),
(iii) le composant isocyanate C) est ajouté au mélange de (ii) dans une chambre de mélange,
(iv) le mélange réactionnel de (iii) est conduit dans une boîte d'injection,
(v) simultanément à l'étape de procédé (iv), les matières renforçantes I) sont conduites au travers de la boîte d'injection et conjointement avec le mélange réactionnel (iii), qui se trouve dans la boîte d'injection, dans une chambre où le durcissement a lieu,
(vi) le composite du mélange réactionnel et des matières renforçantes est durci dans la chambre,
(vii) le composite durci de (vi) est tiré de la chambre par des mécanismes de traction, et
(viii) le composite durci est découpé à la longueur souhaitée.

4. Utilisation du mélange réactionnel constitué par
A) un mélange au moins biphasé de composants non miscibles de manière homogène a) et b)
a) un ou plusieurs polyéther-polyols d'un indice OH de 15 à 50 à base d'oxyde de propylène et
b) un mélange d'un ou de plusieurs polyéther-polyols d'un indice OH de 150 à 600 et d'un ou de plusieurs allongeurs de chaînes et/ou agents de réticulation d'un indice OH de 700 à 1 827, et
B) un ou plusieurs époxydes, avec
C) des polyisocyanates organiques du groupe constitué par le diisocyanate de 1,4-butylène, le diisocyanate de 1,5-pentane, le diisocyanate de 1,6-hexaméthylène (HDI), le diisocyanate d'isophorone (IPDI), le diisocyanate de 2,2,4- et/ou 2,4,4-triméthylhexamétylène, les isomères de bis(isocyanatocyclohexyl)méthyle ou leurs mélanges de teneur en isomères quelconque, le diisocyanate de 1,4-cyclohexylène, le diisocyanate de 1,4-phénylène, le diisocyanate de 2,4- et/ou 2,6-toluylène (TDI), le diisocyanate de 1,5-naphtylène, le diisocyanate de 2,2'-et/ou 2,4'- et/ou 4,4'-diphénylméthane (MDI) ou les homologues supérieurs du MDI (MDI polymère), le 1,3- et/ou 1,4-bis-(2-isocyanato-prop-2-yl)-benzène (TMXDI), le 1,3-bis-(isocyanatométhyl)benzène (XDI) ainsi que le 2,6-diisocyanatohexanoate d'alkyle (diisocyanate de lysine) contenant des groupes alkyle en C₁ à C₆ ou leurs mélanges, et
les diisocyanates éventuellement modifiés en partie avec une structure uretdione, isocyanurate, uréthane, carbodiimide, urétonimine, allophanate, biuret, amide, iminooxadiazinedione et/ou oxadiazinetrione, ainsi que le polyisocyanate non modifié contenant plus de 2 groupes NCO par molécule,
en présence de
D) éventuellement des catalyseurs,
E) des agents de démoulage,
F) éventuellement des inhibiteurs,
G) éventuellement d'autres additifs et/ou adjuvants,
H) éventuellement des charges,
I) des fibres filaments, des mats de fibres et/ou des tissus textiles en tant que matières renforçantes,
pour la fabrication de produits pultrudés par le procédé de pultrusion.
